# EUROPEAN PATENT APPLICATION

(11) **EP 4 578 725 A1**
(43) Date of publication of application: **02.07.2025**
(21) Application number: 24221891.5
(22) Date of filing: 19.12.2024
(51) Int. Cl.: B60L 58/33, H01M 8/043, H01M 8/0432, H01M 8/04746, H01M 8/04858

(54) **SYSTEM AND METHOD FOR OPERATING A FUEL CELL SYSTEM**

(30) Priority: 29.12.2023 SE 2351527
(71) Applicant: Volvo Truck Corporation, 405 08 Göteborg (SE)
(72) Inventor: HINDI, Gustavo, 449 50 Alafors (SE); HABERL, Felix, 417 41 Göteborg (SE); BLOMGREN, Fredrik, 425 35 Kärra (SE)
(74) Representative: Valea AB

(57) **Abstract**

A system and method are provided for controlling operation of a fuel cell system for a vehicle, comprising a fuel cell unit that comprises a fuel cell stack and a coolant system. A control system is configured to preemptively determine that a fuel cell system power ramp-down event will occur when a decrease in power of the fuel cell system would be required as the vehicle is approaching a portion of a route associated with a low power demand from the fuel cell system. The fuel cell system is controlled by reducing a target inlet coolant temperature, and by applying a first response strategy that involves continuously reducing a flow rate of the coolant flow, and/or a second response strategy that may involve continuously and gradually increasing the flow rate of the coolant flow and then, in some situations, continuously and gradually decreasing the flow rate of the coolant flow.

## Description

### TECHNICAL FIELD

The disclosure relates generally to operating a fuel cell system when a power output requested from the fuel cell system is reduced.

The disclosure can be applied in heavy-duty vehicles, such as trucks, buses, and construction equipment, as well as in gensets.

### BACKGROUND

A fuel cell is an electro-chemical device that includes an electrolyte sandwiched between two electrodes such as an anode and a cathode. Solid polymer electrolyte fuel cells, which employ a proton exchange membrane (PEM) generate electric power or energy via electrochemical reaction between fuel, such as hydrogen gas received at the anode or anode side, and oxidant, such as oxygen or air received at the cathode or cathode side. PEM fuel cells are considered well suitable for vehicular applications as well as for stationary applications employing fuel cell systems. Two or more fuel cells are arranged together into a fuel cell stack, in order to provide a higher output voltage. One or more fuel cell stacks may form a fuel cell unit, and a fuel cell system may include one or more fuel cell units.

In fuel cells, metals such as e.g. palladium and platinum are used as catalysts to promote the electrochemical reaction between the hydrogen gas and the oxidizing gas, wherein the reaction occurs across the membrane or electrolyte. A supporting structure made of a catalyst support material, such as carbon, is configured to support the membrane, and the metal catalysts are typically used on the catalyst support material. The condition of the catalysts and the support material defines durability, lifetime, and performance of the fuel cell system. The catalysts need to operate within certain conditions to result in effective reaction rates. Thus, an excessive increase in a single cell voltage may lead to degradation of the catalysts and support material, wherein the single cell voltage can be defined as a cell voltage or potential of each fuel cell of each fuel cell stack in a fuel cell system. Accordingly, during operation of the fuel cell system, it is desirable to maintain the single cell voltage below a certain voltage level.

In fuel cell systems, for example in those with higher power which are gaining increasing attention in automotive and other areas, there is an issue that arises as a load on a fuel cell system is decreasing. In particular, the single cell potential can reach a safe threshold at a higher power of the fuel cell system. Thus, as the power of the fuel cell system decreases at a certain ramp-down rate, the single cell voltage may increase to values that negatively affect the condition of the catalysts and carbon support material. Accordingly, it may be challenging to control the fuel cell system at lower loads in a manner that takes into consideration potential degradation of the catalysts and the support material. Moreover, in many circumstances, it may be required to reduce the power of the fuel cell system relatively quickly i.e. with a fast ramp-down rate. However, it may be challenging to allow a fast reduction in the fuel cell system power while avoiding PEM degradation due to dehydration, excessive increase in a fuel cell stack temperature, and the increase of the single cell voltage above a safety level at which it may cause degradation of the catalysts and the support material.

Various methods have been proposed for controlling a fuel cell system. However, a need remains in improved methods for controlling operation of the fuel cell system as a power demand on the fuel cell system decreases.

### SUMMARY

Aspects of the present disclosure relate to a control strategy for a fuel cell system as power demand on the fuel cell system decreases, in a manner that limits the single cell voltage or potential to values lower than 0.8V. This allows avoiding degradation of the catalysts and support material of a fuel cell stack of the fuel cell system, avoiding PEM degradation, and avoiding an excessive increase in a fuel cell stack temperature. The control strategy allows achieving higher or faster ramp-down rates and a relatively fast reduction of the power of the fuel cell system may thus occur, e.g., between about 75kW/s to about 100kW/s in some circumstances. For example, as a vehicle comprising the fuel cell system is braking, the power produced by the fuel cell system may reduce fast enough without detrimental effects on the fuel cell system.

In an aspect, a fuel cell system for a vehicle is provided that comprises a fuel cell unit comprising a fuel cell stack, a coolant system, and a control system. The fuel cell stack comprises a cathode and an anode, the cathode being configured to receive an air flow via a cathode inlet line. The coolant system is configured to circulate a coolant through the fuel cell stack, and the coolant system comprises a coolant inlet line configured to direct a coolant flow to the fuel cell stack and a coolant outlet line configured to carry the coolant flow away from the fuel cell stack after the coolant has passed through the fuel cell stack. The control system comprises processing circuitry that is configured to preemptively determine a required decrease in power of the fuel cell system based on a required brake power that is required by a vehicle traveling a route at a portion of the route associated with a low power demand from the fuel cell system; and control the fuel cell system to reduce the power of the fuel cell system in preparation for a brake event based on the required brake power. The processing circuitry is configured to control the fuel cell system to reduce the power of the fuel cell system in preparation for a brake event based on the required brake power by: reducing a target inlet coolant temperature of a coolant flow to a first temperature threshold so that an inlet temperature of the coolant flow falls below a threshold coolant flow inlet temperature by a time when the vehicle begins traveling the portion associated with the low power demand from the fuel cell system; responsive to determining that the required decrease in the power of the fuel cell system is in a magnitude of equal to or less than a first threshold power level and associated with a first ramp-down rate requirement, applying a first response strategy that comprises continuously reducing the flow rate of the coolant flow to a value corresponding to the required decrease in the power of the fuel cell system; and, responsive to determining that the required decrease in the power of the fuel cell system is in a magnitude of greater than the first threshold power level and associated with a second ramp-down rate requirement, applying a second response strategy. The second response strategy comprises, in a first stage of the second response strategy, continuously and gradually increasing the flow rate of the coolant flow; and, in a second stage of the second response strategy, as the power of the fuel cell system is reducing and responsive to determining that an outlet temperature of the coolant flow falls below a threshold coolant flow outlet temperature, continuously and gradually decreasing the flow rate of the coolant flow.

The technical benefits include controlling the fuel cell system in a manner that allows reducing the power demand or load on the fuel cell system at a required ramp-down rate, while avoiding a risk that a single cell voltage increases to values that are above the safety threshold of 0.8V. Accordingly, the system and method of the present disclosure provide an improved control of the fuel cell system at low power demands, in the manner that avoids causing degradation of the catalysts and the support material of the fuel cell stack of the fuel cell system. As another advantage, if the fuel cell system power is reduced faster, this allows for more regenerative braking to occur. Accordingly, the overall efficiency of the vehicle is increased.

In some examples, the processing circuitry may be configured to monitor a single cell voltage for the fuel cell stack so that the single cell voltage does not exceed 0.79V.

In some examples, the processing circuitry may further be configured to control the fuel cell system to reduce the power of the fuel cell system in preparation for the brake event based on the required brake power by continuously monitoring an outlet temperature of the coolant flow in order to avoid increasing a temperature of the fuel cell stack of the fuel cell unit; and maintaining a cathode stoichiometry constant.

In some examples, the cathode stoichiometry may be maintained constant by adjusting a power of an air compressor configured to pressurize the air flow provided to the cathode of the fuel cell stack, so that a flow rate of the air flow remains in a constant relation to electrical current output from fuel cell system.

In some examples, the processing circuitry may be configured to acquire a prediction, or prediction information, that the vehicle traveling the route is approaching a part of the route where a portion associated with a high power demand from the fuel cell system is expected to be followed by the portion associated with the low power demand from the fuel cell system where the brake event is expected.

In some examples, the prediction may comprise a prediction of an upcoming top of a descent along the route.

In some examples, the fuel cell unit comprises one fuel cell unit. Thus, the fuel cell system comprises a single fuel cell unit.

In an aspect, a fuel cell vehicle is provided that comprises a fuel cell system in accordance with examples of the present disclosure. The fuel cell vehicle may comprise a vehicle controller that may be configured to determine the required brake power that is required by the vehicle at the portion of the route associated with the low power demand from the fuel cell system; and provide the determined required brake power to the control system of the fuel cell system. In some examples, the vehicle controller may generate the prediction that the vehicle traveling the route is approaching the part of the route where the portion associated with the high power demand from the fuel cell system is expected to be followed by the portion associated with the low power demand from the fuel cell system where the brake event is expected. The vehicle controller may provide the generated prediction to the control system, e.g. a fuel cell control unit (FCCU), of the fuel cell system.

In an aspect, a method controlling operation of a fuel cell unit of a fuel cell system for a vehicle is provided. The method comprises preemptively determining a required decrease in power of the fuel cell system based on a required brake power that is required by a vehicle traveling a route at a portion of the route associated with a low power demand; and controlling the fuel cell system to reduce the power of the fuel cell system in preparation for a brake event based on the required brake power. The controlling comprises reducing a target inlet coolant temperature of the coolant flow to a first temperature threshold so that an inlet temperature of the coolant flow flown through a coolant system of the fuel cell system falls below a threshold coolant flow inlet temperature by a time when the vehicle begins traveling the portion associated with the low power demand from the fuel cell system; responsive to determining that the required decrease in the power of the fuel cell system is in a magnitude of equal to or less than a first threshold power level and associated with a first ramp-down rate requirement, applying a first response strategy that comprises continuously reducing the flow rate of the coolant flow to a value corresponding to the required decrease in the power of the fuel cell system; and responsive to determining that the required decrease in the power of the fuel cell system is in a magnitude of greater than the first threshold power level and associated with a second ramp-down rate requirement, applying a second response strategy. The second response strategy comprises, in a first stage of the second response strategy, continuously and gradually increasing the flow rate of the coolant flow; and, in a second stage of the second response strategy, as the power of the fuel cell system is reducing and responsive to determining that an outlet temperature of the coolant flow falls below a threshold coolant flow outlet temperature, continuously and gradually decreasing the flow rate of the coolant flow.

The technical benefits of the method comprise similar benefits to those described above in connection with the fuel cell system. Accordingly, the method of the present disclosure provides an improved control of the fuel cell system for a power reduction at a required ramp-down rate, in the manner that avoids causing degradation of the catalysts and the support material of the fuel cell stack of the fuel cell system.

In some examples, the method may comprise monitoring a single cell voltage for the fuel cell stack so that the single cell voltage does not exceed 0.79V.

In some examples, the controlling of the fuel cell system to reduce the power of the fuel cell system in preparation for the brake event based on the required brake power may comprise continuously monitoring an outlet temperature of the coolant flow in order to avoid increasing a temperature of the fuel cell stack of the fuel cell unit; and maintaining a cathode stoichiometry constant.

In some examples of the method, the cathode stoichiometry may be maintained constant by adjusting a power of an air compressor configured to pressurize an air flow provided to a cathode of the fuel cell stack, so that a flow rate of the air flow remains in a constant relation to electrical current output from fuel cell system.

In some examples, the method may comprise acquiring a prediction that the vehicle traveling the route is approaching a part of the route where a portion associated with a high power demand from the fuel cell system is expected to be followed by the portion associated with the low power demand from the fuel cell system where the brake event is expected.

In some examples, the prediction may comprise a prediction of an upcoming top of a descent along the route. In some examples, the prediction may be acquired or received from a vehicle controller of the vehicle.

In an aspect, a control system for controlling a fuel cell system of a fuel cell vehicle is provided. The control system comprises processing circuitry configured to perform the method in accordance with examples of the present disclosure.

In an aspect, a fuel cell vehicle is provided that comprises the control system in accordance with examples of the present disclosure. The fuel cell vehicle may comprise the vehicle controller that is communicatively coupled to the control system of the fuel cell system. In some examples, the control system of the fuel cell system is part of the vehicle controller.

In an aspect, a computer program product is provided that comprises computer-executable instructions, which, when executed by processing circuitry, cause the processing circuitry to perform the method in accordance with any aspects and examples of the present disclosure. The processing circuitry may be, e.g., the processing circuitry of the control system of the fuel cell system.

In an aspect, a computer-readable storage medium is provided that has stored thereon a computer program product comprising computer-executable instructions which, when executed by processing circuitry, cause the processing circuitry to perform the method in accordance with any aspects and examples of the present disclosure. The processing circuitry may be, e.g., the processing circuitry of the control system of the fuel cell system.

Additional features and advantages are disclosed in the following description, claims, and drawings. Furthermore, additional advantages will be readily apparent from the present disclosure to those skilled in the art or recognized by practicing the disclosure as described herein. There are also disclosed herein control units, computer program products, and computer-readable media associated with the above discussed technical effects and corresponding advantages.

### BRIEF DESCRIPTION OF THE DRAWINGS

With reference to the appended drawings, below follows a more detailed description of aspects of the disclosure cited as examples.
**FIG. 1** illustrates a side view of an example of a vehicle comprising a fuel cell system in which a method in accordance with examples of the present disclosure may be implemented.
**FIG. 2** is a block diagram illustrating a fuel cell system and a control system of the vehicle of FIG. 1, in accordance with an example.
**FIG. 3** is a flowchart illustrating a method for operating a fuel cell system, in accordance with an example.
**FIGs. 4A** and **4B** are schematic block diagrams illustrating a control system, in accordance with an example.

### DETAILED DESCRIPTION

A fuel cell system, e.g., in those capable of generating high or higher power, as a power demand or load on the fuel cell system decreases, a single cell voltage may reach a safety threshold at higher power levels, e.g., already at 50kW or above in some cases. The fuel cell system may include two or more, or in some cases one fuel cell each comprising one or more fuel cell stacks. The single fuel cell unit may be used in some applications, e.g., in fuel cell vehicles, and benefits include space saving considerations, more straightforward maintenance, and simplified control strategies. This makes it challenging to properly operate the fuel cell system at decreasing and/or low power without a risk of damaging catalysts and support material of fuel cell stacks. Moreover, the excess power may be wasted in some cases e.g. when the ESS is fully charged.

Thus, in fuel cell systems which can operate at a higher power, there is a limitation on how fast it is possible to reduce the fuel cell system power. An overly fast reduction in the fuel cell system power may lead to an increase in a fuel cell stack temperature, membrane e.g. PEM dehydration, as well as spikes in a single cell voltage above 0.8V. The dehydration of the membrane leads to increase in ohmic losses and increased heat production, and variation in water content as the membrane swells and shrinks causes mechanical stress. Moreover, if the single cell voltage, also interchangeably referred to as single cell potential, increases values of or above 0.8V, platinum dissolution starts to occur thereby reducing an electrochemical surface area (ECSA), which in turn leads to reduction of durability, performance, efficiency and lifetime of the fuel cell system. Thus, if the maximum value that the single cell voltage is allowed to reach is set to 0.8V or just below 0.8 e.g. 0.79V, a risk of degradation of the catalysts and the support material may be reduced or avoided.

In certain applications, e.g., in fuel cell electric vehicles, a fast ramp down of power of the fuel cell system may be required when a period of high propulsion power is suddenly interrupted by a brake event of high power. For example, a vehicle may be at a top of a descent where braking is needed. In some cases, the battery ability to absorb brake power may be limited and there thus may be a need to employ some form of brake assistance, such as e.g. a retarder, brake resistors, etc. The brake power may be affected as the fuel cell system produces power during the brake event, because the produced fuel cell power, while decreasing or ramping down, has to either be directed into an ESS, such as e.g. a battery, or dispersed to ambient. Furthermore, the longer it is taking for the fuel cell system to ramp down from a high-power level to a low-power or minimum level, the more pronounced the detrimental effects may be such as a waste of the electrical power produced by the fuel cell system. Also, the fuel cell system will be rejecting heat while still operating at a high or higher power, which may limit the ability of the cooling system to handle the rapid and increasing demand from auxiliary brakes, thereby limiting an actual braking performance of the vehicle.

As another example, in stationary applications, when a fast disconnect from the grid or sudden drops in electrical power are required, the longer the fuel cell system takes to reduce its power, the higher will be the wasted energy and thus the inefficiency of the fuel cell system in the application.

In existing solutions fuel cell systems, in order to avoid to the above-mentioned issues associated with reducing fuel cell system power at high ramp-down rates, limitations may be set on the ramp down rates. In systems where durability and performance are less important, fast ramp-down rates may still be applied but at the expense of compromising the durability and performance of the fuel cell system.

The method and system of the present disclosure employ a control strategy allows fast ramp-down rates with which a power of a fuel cell system may be reduced when needed. In the fuel cell system in accordance with examples of the present disclosure, a cathode stoichiometry or cathode stoichiometry ratio may be monitored and actively controlled during normal operation and at ramp-down events. The cathode stoichiometry may be defined as the ratio of the amount of air provide to the fuel cell to the amount of air required for the electrochemistry reactions to provide a given output current.. The cathode stoichiometry in the normal operation of a fuel cell system is usually maintained at relatively high values, being higher at lower loads to minimize risks of oxygen starvation than at higher loads. In some examples, during ramp-down events, the cathode stoichiometry may be maintained at a cathode stoichiometry of around 1.5 instead of going to higher stoichiometries of a normal operation in lower power.

A target inlet coolant temperature may be actively controlled, while actual inlet and output coolant temperatures are monitored. Also, coolant flow rates may be actively controlled during normal operation and at ramp-down events. A fuel cell control unit or system may be configured to, based on a required power drop, change one or more of parameters such as e.g. a flow rate of a coolant, a cathode stoichiometry, a target inlet coolant temperature, etc., while these parameters and the single cell voltage are monitored. In a vehicle application, a prediction may be applied to predict battery power ability, brake requirements, fuel cell power requirements, and the like.

The control system may acquire information, or determine, that the vehicle traveling a route is approaching a part of the route where a portion associated with a high power demand from the fuel cell system is expected to be followed by a portion associated with a low power demand from the fuel cell system where a brake event is expected. The ESS of the vehicle may have a limited ability to absorb power when the vehicle is at or approaching a portion of the route associated with the low power demand from the fuel cell system. The control system may preemptively determine a required decrease in power of the fuel cell system based on a required brake power that is required by the vehicle at the portion of the route associated with the low power demand from the fuel cell system. The control system may control the fuel cell system to reduce the power of the fuel cell system, in preparation for the brake event based on the required brake power, by reducing a target inlet coolant temperature of a coolant flow to a first temperature threshold so that an inlet temperature of the coolant flow flown through a coolant system of the fuel cell unit falls below a threshold coolant flow inlet temperature by a time when the vehicle begins traveling the portion associated with the low power demand from the fuel cell system. Further, in dependence on a magnitude of the required decrease in the power of the fuel cell system, which decrease is associated with a corresponding ramp-down rate requirement, the control system may apply a first response strategy or a second response strategy, thereby allowing for a fast ramp-down of the power of the fuel cell system. The single cell voltage is monitored and controlled not to exceed 0.79V.

Accordingly, in the method and system in accordance with examples of the present disclosure, lower power levels in a fuel cell system may be achieved faster i.e. higher ramp-down rates may be applied, without a risk of the single cell potential increasing to above the safety threshold of 0.8V and without negatively affecting fuel cell stack membrane durability and performance. Thus, the overall lifetime of the fuel cell system may be increased. As further advantages, less power is wasted, and also regenerative braking ability may be improved since the fuel cell system may produce less power when ramp-down rates increase.

Accordingly, the system and method of the present disclosure advantageously provide an improved control of the fuel cell system at low power demands, in the manner that avoids causing degradation of the catalysts and the support material.

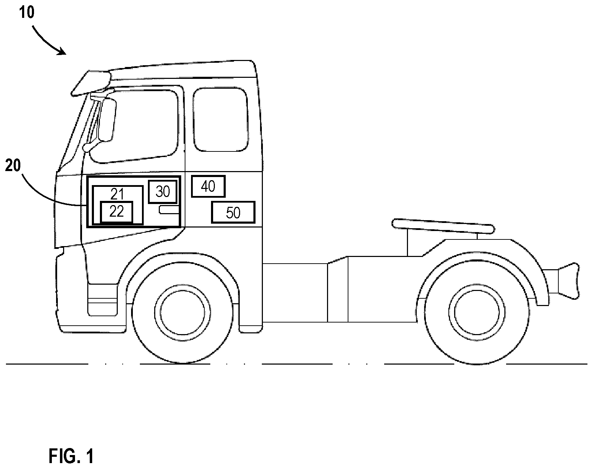

**FIG. 1** depicts a side view of a vehicle 10 according to an example of the present disclosure. The vehicle 10 is shown as a truck, such as a heavy-duty truck for towing one or more trailers (not shown). The vehicle 10 may be a fuel cell electric vehicle (FCEV) or a hybrid vehicle. It should be appreciated that the present disclosure is not limited to any other specific type of vehicle, and may be used for any other type of vehicle, such as a bus, construction equipment, e.g. a wheel loader or an excavator, a passenger car, an aircraft, and a marine vessel. The present disclosure is also applicable for other applications not relating to vehicles, including stationary applications.

As shown schematically in FIG. 1, the vehicle 10 comprises a fuel cell system 20 comprising a fuel cell unit 21 that comprises one or more fuel cell stacks 22. The fuel cell system 20 may be used for powering one or more electric drive motors (not shown) which are used for creating a drive force for the vehicle 10. The fuel cell system 20 may additionally or alternatively be used for powering other electric power consumers (not shown) of the vehicle 10, such as an electric motor for a crane, an electric motor for a refrigerator system, an electric motor for an air conditioning system, or any other electric power consuming function of the vehicle 10. The fuel cell system 20 may thus additionally or alternatively be used for powering a power take-off (PTO) device that is a device that transfers an electric motor's power to another piece of equipment. The vehicle 10 may include or be coupled to or associated with one or more PTO devices.

The fuel cell unit 21 of the fuel cell system 20 comprises one or more fuel cell stacks 22 each comprising two or more, typically multiple, fuel cells. In examples herein, the fuel cell unit 21 may comprise multiple fuel cell stacks 22, and any mention of the fuel cell stack 22 applies to two or more fuel cell stacks. The fuel cell unit 21 is arranged to provide the fuel cells with necessary supply of fuel e.g. hydrogen gas, oxidant such as air or oxygen, cooling, heating, etc. The fuel cell system 20 may include various components which are not shown in FIG. 1. In some examples, the fuel cell system 20 may comprise more than one fuel cell unit 21, and each fuel cell unit may comprise its own controller system, which may be communicatively connected to a controller or control unit configured to control operation of the fuel cell system 20.

The fuel cell system 20 may comprise a single fuel cell system, two fuel cell systems, or more than two fuel cell systems, such as three or more fuel cell systems. When several fuel cell units or systems are provided, the fuel cell systems may be either independently controllable or commonly controllable. When independently controllable, each fuel cell system may be controlled to an on-state or an off-state regardless of the state(s) of the other fuel cell system(s). When two or more of the fuel cell systems are commonly controllable, those fuel cell systems are controllable in common to an on-state or an off-state, i.e., all fuel cell systems are controlled in common to the same state.

The vehicle 10 further comprises a control device or control system 30 according to an example of the present disclosure. The control system 30 is configured or adapted to control operation of the fuel cell system 20 in accordance with examples of the present disclosure. The system 30 may be referred to as a fuel cell control unit (FCCU). The control system 30 may be part of the fuel cell system 20 or it may be a separate component. The control system 30 may be communicatively coupled to a vehicle control system or controller 50 shown in FIG. 1. The vehicle control system 50 may be e.g. a main vehicle controller. In some implementations, the control system 30 may be part of the vehicle controller 50. Furthermore, even though an on-board control system 30 is shown, it shall be understood that the control system 30 may also be a combination of an on-board and off-board control system or systems.

The control system 30 may be configured to control the fuel cell system 20 and the one or more fuel cell units 21 by issuing control signals and by receiving status information relating to the fuel cell system 20. The control system 30 may be configured to receive information from various sensors, including one or more of temperature sensors, moisture sensors, voltage sensors, and other sensors included in or associated with the fuel cell system 20 and/or the vehicle 10. For example, one or more temperature sensors may be positioned such that they can acquire measurements of a temperature of a coolant, as well as other media, in the fuel cell system 20. In some example, temperature sensors may be used to measure an inlet coolant temperature and an outlet coolant temperature of the coolant flow passed through the fuel cell stack 22. One or more voltage sensors may be included in the fuel cell unit to monitor voltage of the fuel cell stacks. Various other sensors may acquire measurements regarding operation of components of the fuel cell system 20.

The control system 30 may be communicatively coupled to an internal database, an external database, or a combination thereof, e.g. to receive data related to a route traveled or to be traveled by the vehicle. The data related to the route may include a start point, an end point, and a path traveled by the vehicle 10 between the start and end points. The control system 30 may store and/or may have access to data related to the route including terrain information, speed limits, obstacles, etc. The control system 30 may also receive real-time, or close-to-real-time, information on the route including a traffic congestion, accident reports, road closures, construction, etc. The control system 30 may also store and/or may have access to historical data related to driver's driving pattern, historical data on the vehicle operation e.g. locations traveled by the vehicle, frequency and locations of stops, historical data on ambient conditions at the locations traveled by the vehicle, etc. The control system 30 may further receive data from a weather service which may include data on actual and predicted weather conditions, and other types of data. The control system 30 may have data on a vehicle current location and predicted locations that the vehicle is expected to travel, e.g. along the route.

The control system 30 may be configured as an electronic control unit and may comprise processing circuitry which is adapted to execute a computer program such as computer-executable instructions to perform a method according to aspects of the present disclosure. The control system 30 may comprise hardware and/or software for performing the method according to aspects of the present disclosure. The control system 30 may be denoted a computer. The control system 30 may be constituted by one or more separate sub-units, and the control system 30 may communicate by use of wired and/or wireless communication technology.

As shown in FIG. 1, the vehicle 10 comprises an energy storage system (ESS) 40 such as e.g. one or more batteries and/or one or more supercapacitors for storing electric energy, including excess electric energy produced by the fuel cell system 20. The ESS 40 may store energy regenerated during braking such as regenerative braking, and/or it may be configured for being charged by a charger, such as, e.g., from an external power grid. The ESS 40 is configured to assist the fuel cell system 20 in supplying energy to a drive motor, to meet power/energy demands of the vehicle 10. The ESS 40 may be configured to provide additional power in situations when the complete required power cannot be provided by fuel cell system 20, or when it is not suitable to provide the complete required power by the fuel cell system 20. In various examples, the ESS 40 provide electrical energy storage for electrical energy that is generated from the fuel cell system at low loads, assist the fuel cell system 20 with generating power at higher loads, or may serve as a main energy supplier in some circumstances. The fuel cell system 20 and the ESS 40 can provide power to one or more auxiliary systems of the vehicle 10.

The vehicle 10 may also comprise various other components not shown in FIG. 1.

Although the present disclosure is described with respect to a vehicle such as a truck, aspects of the present disclosure are not restricted to this particular vehicle, but may also be used in other vehicles such as passenger cars, off-road vehicles, aircrafts, and marine vehicles. The present disclosure may also be applied in vessels and in stationary applications, such as in grid-connected supplemental power generators or in grid-independent power generators.

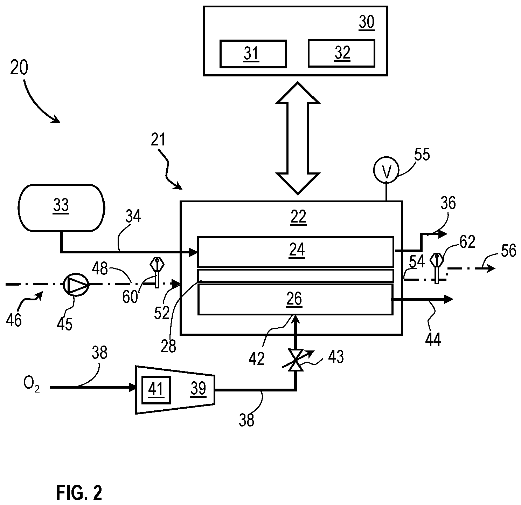

**FIG. 2** further illustrates an example of fuel cell system 20 that can be deployed in a fuel cell vehicle such as the vehicle 10. As shown, the fuel cell system 20 comprises the fuel cell unit 21 that in turn comprises the fuel cell stack 22. The fuel cell unit 21 may include more than one stack and the fuel cell stack 22 is shown as an example. Operation of the fuel cell system 20 is controlled by the control system 30 also shown in FIG. 2.

The fuel cell stack 22 comprises an anode side or anode 24, a cathode side or cathode 26, and an electrolyte 28 such as e.g. a proton exchange membrane (PEM) sandwiched between the anode 24 and the cathode 26. The fuel cell stack 22 is configured to generate power through an electrochemical reaction between a hydrogen gas and an oxidant. The anode 24 is configured to receive fuel such as hydrogen gas that can be supplied from a hydrogen storage device 33 e.g. a hydrogen container or tank that may be refillable and/or replaceable. Any other suitable source of hydrogen can be used. The anode 24 is configured to receive the hydrogen gas via an anode inlet line 34, and an anode outlet line 36 may be configured to receive and lead away from the anode 24 byproducts of operation of the anode 24.

The cathode 26 is configured to receive air or oxygen, referred to herein as an air flow, e.g. from the ambient environment via a cathode inlet line 38, at a cathode inlet 42 of the fuel cell stack 22. The air may be pressurized by an air compressor 39 comprising a motor 41. In some examples, the air compressor 39 may be an electric turbocharger (ETC) comprising a turbine and compressor. In some examples, a power of the air compressor 39 may be controlled or adjusted, e.g. adjusting a rotating speed of the motor 41, to control a flow rate of the air flow in the cathode inlet line 38 to thereby control a cathode stoichiometry. In some examples, the power of the air compressor 39 may be controlled or adjusted so as to control, the flow rate of the air flow to remain in a constant relation to electrical current output from the fuel cell system, whereby the cathode stoichiometry is maintained constant. This may be performed as ramp-down events when power of the fuel cell system is reduced.

Furthermore, in some examples, a cathode air pressure, also referred to as an air pressure in the cathode 26, may be controlled to prevent the membrane 28 of the fuel cell stack 22 from drying. For example, an air pressure control valve 43 may be fluidly coupled to the cathode inlet line 38 and the pressure control valve 43 may be controlled to regulate the air pressure in the cathode 26. In some implementations, in addition or alternatively, the air compressor 39 may be controlled to regulate the air pressure in the cathode 26.

The air compressor 39 may be fluidly coupled to a charge air cooler (CAC), not shown in FIG. 2, that is configured to cool the pressurized air flow or stream in the cathode inlet line 38. The air flow may also be humidified by a humidifier (not shown). The cathode 26 may be configured to discharge a cathode exhaust flow via a cathode outlet line 44.

As shown in FIG. 2, the fuel cell unit 21 comprises a coolant circuit or system 46 configured to circulate a coolant through the fuel cell stack 22. As shown in the example of FIG. 2, the coolant system 46, shown using dot-dashed lines, may be configured to circulate the coolant through the fuel cell stack 22 such that the coolant flows to a coolant inlet 52 of the fuel cell stack 22 via a coolant inlet line 48 and flows out of a coolant outlet 54 of the fuel cell stack 22 via a coolant outlet line 56. The coolant system 46 may comprise a coolant circulation pump 45 configured to circulate the coolant through the stack 22. The coolant circulation pump 45 is configured to be controlled to control a flow rate of the coolant flow entering the fuel cell stack 22 at the coolant inlet 52 of the fuel cell stack 22. Other components may additionally or alternatively be used to control the flow rate of the coolant flow in the fuel cell stack 22.

In addition, it should be appreciated that the specific position of the pump 45 is shown as an example only, for illustration purposes. The coolant system 46 may comprise other components such as e.g. a radiator, a coolant tank for storing the coolant, etc., not shown in FIG. 2. Although not shown in FIG. 2, the coolant is circulated through the coolant system 46 such that the coolant outlet line 54 may be in fluid communication with the coolant inlet line 48 and the coolant is recirculated back to the coolant inlet 52 after having passed through the stack 22.

The coolant system 46, e.g., a circuit, is configured to regulate the temperature of the fuel cell stack 22, including to dissipate heat generated as a result of operation of the fuel cell stack 22. A temperature of the coolant at the coolant inlet 52 and the coolant outlet 54 may be adjusted and/or controlled depending e.g. on a power demand from the fuel cell system 20 and other factors. FIG. 2 shows schematically that the coolant system 46 may comprise a coolant inlet temperature sensor 60 and a coolant outlet temperature sensor 62 that are configured to monitor temperature of the coolant at the coolant inlet 62 and at the coolant outlet 54, respectively. More than two temperature sensors may be deployed in various implementations.

In examples in accordance with the present disclosure, a target coolant inlet temperature of the coolant at the coolant inlet 52 may be controlled. A flow rate of the coolant flow may also be controlled, e.g., by controlling operation of the pump 45. In this way, the single cell voltage of the fuel cell stack 22 is maintained to remain below 0.79V. The target coolant inlet temperature may be defined as a set point i.e. a value of the coolant temperature that is set to be achieved at the coolant inlet 52. The actual temperature of the coolant in the coolant inlet line 48, in the entrance to the stack 22 at the coolant inlet 52, may be adjusted by setting the target coolant inlet temperature, and the actual coolant inlet temperature may be measured using e.g. the coolant inlet temperature sensor 60. The actual coolant outlet temperature, at the coolant outlet 54, will also depend on the target coolant inlet temperature, through it will vary also in dependence on heat rejection properties of the fuel cell stack 22, ability of the coolant system 46 to adjust the temperature of the fuel cell stack, and on other factors.

As also shown schematically in FIG. 2, a voltage sensor 55 may be deployed to monitor voltage of the fuel cell stack 22. One or more suitable voltage sensors may be used. A single cell voltage of the fuel cell stack 22 may be determined using measurements acquired by the voltage sensor. In some examples, the single cell voltage of the fuel cell stack 22 may be determined as a measured voltage of the fuel cell stack 22 divided by a number of fuel cells in the fuel cell stack 22. Thus, the single cell voltage may be determined as an average single cell voltage and it represents a voltage of each fuel cell in each fuel cell stack, and this is the voltage whose value is not to exceed a safety threshold. In some examples, the single cell voltage may be determined from a measured voltage of the entire fuel cell unit, in which case this measured voltage is divided by the number of stacks and the number of cells in each stack. In some examples, a voltage of each fuel cell is measured and an average value of these measured voltages may be taken as the single cell voltage of the fuel cell stack. Regardless of the way in which the single cell voltage of the fuel cell stack is measured, the fuel cell system is controlled so that the single cell voltage does not exceed 0.8V or 0.79V as in some examples of the present disclosure.

Operation of the fuel cell unit 21 is controlled by the control system 30. In some examples, the control system 30 may be part of the vehicle controller 50 shown in FIG. 1. In examples herein, as shown in FIG. 2, the control system 30 comprises processing circuitry 32 that is configured execute computer-executable instructions that, when executed by the processing circuitry 32, may perform a method in accordance with examples of the present disclosure. The control system 30 also comprises memory 31 that is configured to store the computer-executable instructions and various data. In some implementations, the computer-executable instructions may be stored, at least in part, remotely e.g. in a remote memory. The memory 31 may acquire data from various sources including from one or more remote storages.

The processing circuitry 32 of the control system 30 may be configured to obtain power of the fuel cell system, also referred to as a value of power output, that is requested from the fuel cell system 20. The processing circuitry 32 is configured to monitoring a voltage of the fuel cell stack 22, and the processing circuitry 32 is configured to control a target coolant inlet temperature of the coolant flow, as well as the flow rate of the coolant flow to maintain the single cell voltage of the fuel cell stack 22 to remain below 0.79V. In this way, the risk of a damage to the catalysts and the support material of the fuel cell stack may be reduced or eliminated, which improves the durability and extends the lifetime of the fuel cell stack and of the entire fuel cell system.

In some examples, the fuel cell unit 21 comprises one fuel cell unit. Thus, the fuel cell system 20 may comprise a single fuel cell unit. The efficiency of such fuel cell system may be higher but this may be associated with an increase in the single cell voltage at lower loads.

It should be appreciated that the configuration of the fuel cell system 20 shown in FIG. 2 is by way of example. Also, the fuel cell system 20 may comprise other components not shown in FIG. 2.

In a fuel cell electric vehicle, e.g, vehicle 10, in certain circumstances, a period of high propulsion power, at which an ESS and the cooling system are operating at high power, may be suddenly interrupted by a brake event of high power at which an auxiliary brake is also operating at high power. The power produced by the fuel cell system reduces the brake power, e.g., every kilowatt of the produced fuel cell power during the brake event may be one kilowatt less of the brake power. This is because the produced fuel cell power, while ramping down, has to either be directed into the ESS such as e.g. battery and/or has to be dispersed to ambient through an auxiliary brake and the cooling system.

As an example, a vehicle may be approaching a top of an uphill climb where, up to a point when brakes are applied, a maximum electrical power has been required from the fuel cell system. In that condition, the fuel cell stack will be operating at a high temperature with the cooling system almost fully dedicated to managing the heat load from the fuel cell stack. As another example, the ESS e.g. battery may be overheated if it has been providing power to allow the vehicle to climb at a specific driving condition or, the ESS may have a high state of charge (SOC) as the vehicle is approaching the top of the climb. In both of these cases, the ESS will have a limited ability to absorb brake power.

In some examples, a controller, e.g., a vehicle control system and/or a fuel cell system controller, may predict an upcoming descent or an upcoming top of a descent along the route. Another situation may be predicted in which the vehicle will need to slow down and potentially quickly. This prediction, together with information on ESS's power ability, an output power of the fuel cell system, fuel cell heat rejection to a coolant, a target inlet coolant temperature, a target outlet coolant temperature, actual coolant inlet and output temperatures, a fuel cell coolant flow rate, a single cell voltage, and cathode stoichiometry, may be used to estimate a required brake power.

If the ESS power ability is limited or non-existing in e.g. a vehicle descent scenario, an auxiliary brake system may need to be employed and thus will require that the coolant system is able to manage its demand. It will thus be required and/or desired that the fuel cell system control system and/or the vehicle control system attempt to drop the fuel cell system power and cooling demands as quickly as possible, without impacting the durability and performance of the fuel cell system.

Accordingly, examples in accordance with the present disclosure provide an approach to allow for a fast ramp-down of the power of the fuel cell system, in the manner that does not negatively affect the durability, performance, and lifetime of the fuel cell system.

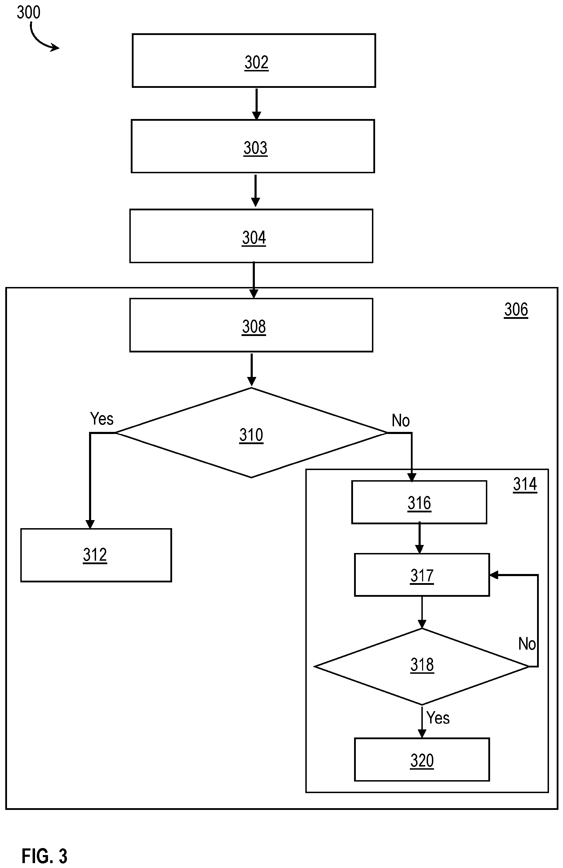

**FIG. 3** illustrates an example of a process or method for operating a fuel cell system comprising a fuel cell unit that comprises a fuel cell stack comprising a cathode and an anode. The cathode is configured to receive an air flow via a cathode inlet line and to provide a cathode exhaust flow via a cathode outlet line. The air flow is received at a cathode inlet in fluid communication with the cathode inlet line, and the cathode exhaust flow is expelled from a cathode outlet in fluid communication with the cathode outlet line. The fluid cell unit also comprises a coolant system configured to circulate a coolant through the fuel cell unit, the coolant system comprising a coolant inlet line configured to direct the coolant from a coolant source to the fuel cell stack and a coolant outlet line configured to carry the coolant away from the fuel cell stack after the coolant has passed through the fuel cell stack.

The fuel cell system may be fuel cell system 20 of FIGs. 1 and 2 or a fuel cell system having another configuration. The method 300 is described hereinbelow in connection with FIG. 2 for illustration purposes only, and it should be appreciated that another fuel cell system may be used.

The method 300 may be performed by a controller or control system 30 such as e.g. control system shown in FIGs. 1 and 2. The processing circuitry 32 of the control system 30 may execute computer-executable instructions stored e.g. in memory of the control system 30, wherein the computer-executable instructions, when executed, cause the processing circuitry 32 to perform the method 300.

The process 300 may begin at any suitable time. For example, it may be executed as a vehicle e.g. vehicle 10 comprising the fuel cell system 20 is traveling a route and a load on the fuel cell system 20 changes. A power demand from the fuel cell system 20 may decrease when the vehicle 10 is traveling downhill, when it slows down due to e.g. traffic conditions, and in various other circumstances. The vehicle may travel the route, e.g., as part of a mission or task which may comprise traveling from a start point to an end point. The vehicle may be part of a fleet of vehicles.

At **block 302,** the control system may obtain or acquire a prediction i.e. information that the vehicle traveling a route is approaching a part of the route where a portion associated with a high power demand from the fuel cell system is expected to be followed by a portion associated with a low power demand from the fuel cell system where a brake event is expected. The vehicle brake event will require a ramp-down or ramp-down event of the fuel cell system at which a power output requested from the fuel cell system is reduced. In some cases, the ramp-down event requires a high ramp-down rate, e.g. around 75 kilowatt per second (kW/s). The high ramp-down rate may comprise other values. The prediction may be obtained from the vehicle controller, e.g. vehicle controller 50 shown in FIG. 1.

For example, the vehicle may be traveling uphill and it may be predicted that the vehicle is approaching a downhill portion i.e. a top of a descent, where vehicle brakes will need to be applied i.e. the brake event is expected. As another example, the vehicle may be traveling at a high speed a certain portion of the route and the control system may predict that the vehicle will be slowing down due to various factors such as e.g. one or more of characteristics of the road, an expected stop, traffic conditions, and others. Accordingly, in some examples, the prediction made at block 302 may be a prediction of an upcoming top of a descent along the route.

In some cases, the ESS of the vehicle may have a limited ability to absorb power when the vehicle is at or approaching a portion of the route associated with the low power demand from the fuel cell system. Accordingly, the ESS would not be able to absorb the power produced by the fuel cell system at the ramp-down event, or it might be able to absorb only a limited amount of power. At the same time, allowing for the fast fuel cell system power ramp-down, in accordance with examples of the present disclosure, may improve the regenerative braking ability of the vehicle because, at the fast ramp-down, the fuel cell system stays at high or higher lower levers for a shorter duration of time. In any case, managing of the ESS and the regenerative braking are not discussed in detail in the present disclosure.

As used herein, a low power demand may be defined as a power requirement from the fuel cell system where for example the fuel cell is placed in an idle condition or at power levels that are lower than half of the full power capability of the fuel cell system. A high power demand may be defined as a condition at which the fuel cell system is operated at its full power capability or at power levels higher than half of the full power capability of the fuel cell system.

The prediction may be regarding a certain time period or a time horizon. A duration of the time horizon may be selected in dependance on particular circumstances, for example, on properties of the route that the vehicle is traveling, on how frequently braking events are expected to occur along the route, based on vehicle driver's known driving patterns and driver's behaviour, etc. In some examples, the duration of the time horizon may be a dynamic parameter, such that it may be adjusted based on current and predicted route properties, which may include topological properties of the route including a degree of each descent, road types including speed limits, traffic conditions, weather conditions, etc. The duration of the time horizon may be selected such that there is a sufficient time to determine or detect that the vehicle is traveling a part of the route where a braking event is expected such that the fuel cell system will need to be prepared for the brake event and corresponding fast ramping down. A fast response from the fuel cell system is required. For example, in some cases, the fast response from the fuel cell system may be such that a ramp-down rate from about 30kW/s to about 100kW/s may be achieved. As used herein, the term "about" indicates within 10% of a stated value. The ramp-down rate may depend on a magnitude of a required power decrease, such that, e.g., a higher power decrease may require a higher ramp-down rate i.e. a faster response from the fuel cell system so that its power output is reduced.

Non-limiting examples of the duration of the time horizon may be 30 minutes, one hour, two hour, three hours, etc. Any other suitable duration of the time horizon may be used in addition or alternatively.

The control system may acquire the prediction from, e.g., a vehicle control system, e.g. vehicle controller 50 shown in FIG. 1. The vehicle control system may comprise e.g. a mission management system configured to monitor and control the vehicle's fulfillment of a mission or task, e.g., traveling the route and performing other tasks. In implementations in which the control system is part of the vehicle control system, the control system may generate the prediction that the vehicle is approaching the part of the route where the portion associated with the high power demand from the fuel cell system is expected to be followed by a portion associated with the low power demand from the fuel cell system.

At **block 303,** the control system may monitor a single cell voltage for the fuel cell unit so that the single cell voltage does not exceed 0.79V. It should be understood that the monitoring of the single cell voltage may be performed continuously during the process 300, and the block 303 is shown to follow block 302 for illustration purposes only. Thus, the single cell voltage is monitoring as other processing is performed when a fast ramp-down of the fuel cell power is required.

At block 304, the control system preemptively i.e. in advance determines a required decrease in power of the fuel cell system based on a required brake power that is required by the vehicle at the portion of the route associated with the low power demand. The vehicle may be required to brake when it is for example slowing down, and the amount of power drawn from the fuel cell system, also referred to as a load on the fuel cell system, will need to be decreased accordingly. In some circumstances, the control system may acquire the required brake power which may be determined by a vehicle main controller. The power of the fuel cell system comprises electrical current produced by the fuel cell system such as by each fuel cell stack of the fuel cell unit of the fuel cell system.

The required brake power may be determined, e.g., by the vehicle controller, e.g., vehicle controller 50 shown in FIG. 1, and it may be communicated to the control system. Thus, in some examples, the control system may receive information on the determined required brake power from the vehicle controller, e.g., vehicle controller 50 shown in FIG. 1.

Determining the required decrease in the power of the fuel cell system in advance may allow to prepare the fuel cell system for the braking event. For example, as discussed in more detail below, a coolant temperature will need to be reduced in advance of a time when the vehicle begins traveling the portion associated with the low power demand from the fuel cell system. The vehicle braking event may occur as the vehicle begins traveling the low power demand portion or with some delay during the vehicle traveling the portion of the route associated with the low power demand from the fuel cell system.

At **block 306,** the control system controls the fuel cell system to reduce the power of the fuel cell system in preparation for the brake event based on the required brake power. The controlling at block 306 may encompass several processes as shown at blocks 308, 310, 312, 314, 316, 318, and 320.

At **block 308,** the process 300 comprises reducing a target inlet coolant temperature of a coolant flow to a first temperature threshold so that an inlet coolant temperature of the coolant flow flown through the coolant system of the fuel cell unit falls below a threshold coolant flow inlet temperature by a time when the vehicle begins traveling the portion associated with the low power demand from the fuel cell system. Because the process 300 is performed in circumstances when the fuel cell system is initially operating with high power output, a temperature of the fuel cell stack and thus a temperature of the coolant flow will need to be reduced in order to allow for a fast ramp down of the fuel cell power at a braking event.

The target coolant inlet temperature may be defined as a set point i.e. a value of the coolant temperature that is set to be achieved in the coolant inlet line, as the coolant enters the fuel cell stack. The actual temperature of the coolant at the coolant inlet line is decreased as the target inlet coolant temperature is reduced, and the progress of the decrease of the actual temperature of the coolant flow at the coolant inlet line may be monitored.

In some examples, the first temperature threshold may be 60 °C, such that the target inlet coolant temperature may be reduced to 60 °C. The first temperature threshold, which may have other values, may depend on a time estimated to be required for the target inlet coolant temperature to reach the first temperature threshold by a time the vehicle begins to brake e.g. at the start of a descent, given known characteristics of the coolant system. Thus, the first temperature threshold may be set to a lower value when it is expected that it will take longer for the target inlet coolant temperature to decrease to the first temperature threshold.

At decision **block 310,** the control system determines whether the required decrease in the power of the fuel cell system is in a magnitude of equal to or less than a first threshold power level and associated with a first ramp-down rate requirement. In some examples, the first threshold power level may be of a magnitude of, e.g., about 250kW, though other values may be used. The magnitude of the required decrease in the power of the fuel cell system, i.e. the power that is output from the fuel cell system, may define how fast the power reduction may be required to be achieved. Thus, a certain first ramp-down rate requirement is associated with the required decrease in the power of the fuel cell system in the magnitude of equal to or less than a first threshold power level.

At **block 312,** responsive to determining that the required decrease in the power of the fuel cell system is in a magnitude of equal to or less than the first threshold power level and is associated with the first ramp-down rate requirement, the control system may apply a first response strategy. The first response strategy comprises continuously reducing a flow rate of the coolant flow to a value corresponding to the required decrease in the power of the fuel cell system. The flow rate of the coolant flow may be reduced from a current flow rate value to a lower flow rate value corresponding to continuously decreasing power of the fuel cell system. The current flow rate value may be associated with a fuel cell output power at the beginning of the ramp-down event, and the value that corresponds to the required decrease in the power of the fuel cell system is a required power at the end of the ramp-down event.

The continuous reduction of the flow rate of the coolant flow needs to follow a power reduction of the fuel cell system, such that a rate of the reduction in the flow rate of the coolant flow depends on the first ramp-down rate requirement and on a rate of an actual reduction of the power of the fuel cell system.

As the control system applies the first response strategy, the control system may continuously monitor an outlet temperature of the coolant flow in order to avoid increasing a temperature of a fuel cell stack of the fuel cell unit. The control system also maintains a cathode stoichiometry constant. In some examples, the cathode stoichiometry may be maintained constant by adjusting a power of an air compressor configured to pressurize an air flow provided to the cathode of the fuel cell stack, so that a flow rate of the air flow remains in a constant relation to an electrical current output from fuel cell system. In some examples, during ramp-down events, the cathode stoichiometry may be maintained at a cathode stoichiometry of around 1.5.

In some examples, the control system controls the fuel cell system to starts the ramp down by targeting a required power at the end of the ramp-down event, in accordance with the required decrease in the power of the fuel cell system. The coolant flow rate and coolant temperature are controlled during the ramp-down event and the cathode stoichiometry is maintained constant during this ramp-down event. The coolant flow rate is continuously reduced as the ramp-down event progresses, while monitoring the fuel cell outlet temperature to allow it to slowly reduce during the process.

At **block 314,** responsive to determining that the required decrease in the power of the fuel cell system in a magnitude of greater than the first threshold power level and associated with a second ramp-down rate requirement, the control system applies a second response strategy. The second response strategy may be applied when it is required to reduce the power of the fuel cell system to a larger value, for example, 300kW in an example. The second ramp-down rate requirement, i.e. a required rate at which it is desired to reduce the power of the fuel cell system, is higher than the first ramp-down rate requirement. The higher the required power reduction, the faster it is desired to reduce the fuel cell power in accordance with the required reduction.

The second response strategy may comprise two stages, referred to herein as first and second stages. In the first stage, the flow rate of the coolant flow may be increased. In the second stage, if an outlet temperature of the coolant flow falls below a predetermined threshold temperature or a threshold coolant flow outlet temperature, the flow rate of the coolant flow may be decreased. The processing at block 314 is shown as comprising blocks or sub-blocks 316, 318, and 320.

At **block 316,** in a first stage of the second response strategy, the process 300 comprises continuously and gradually, i.e. in a progressive way rather than in an abrupt manner, increasing the flow rate of the coolant flow. The flow rate of the coolant flow may be increased from a current flow rate value to a higher flow rate value that may correspond to a certain decrease in the outlet temperature of the coolant flow. The current flow rate value may be associated with a fuel cell output power at the beginning of the ramp-down event.

At **block 317,** the outlet temperature of the coolant flow may be monitored. It should be appreciated however that the outlet temperature of the coolant flow is monitored continuously throughout the process 300, and that the processing at block 317 is shown separately for illustration purposes only.

As the flow rate of the coolant increases, the outlet temperature of the coolant flow decreases, and a decrease below a certain predetermined threshold temperature may not be desired.

The outlet temperature of the coolant flow may be continuously monitored also in order to avoid increasing the temperature of the fuel cell stack. It is desirable to avoid the stack temperature to increase because, if the stack temperature increases, the membrane dehydrates faster.

The cathode stoichiometry may be maintained constant. The single cell voltage is also monitored, to ensure that it does not exceed 0.79V.

At decision **block 318,** the control system may determine whether the outlet temperature of the coolant flow falls below a threshold coolant flow outlet temperature. In some examples, the threshold coolant flow outlet temperature may be a temperature that is below about 3 °C, or about 4 °C, or about 5 °C of an expected known coolant outlet temperature at a given power of the fuel cell system. When the outlet temperature of the coolant flow falls below the threshold coolant flow outlet temperature of the coolant flow, it may be indicating that the fuel cell temperature is excessively low, which is not desirable.

As shown in FIG. 3, if it is determined at block 318 that the outlet temperature of the coolant flow is not below the predetermined threshold temperature, the process 300 may return to block 317 where the outlet temperature of the coolant flow continues to be monitored.

If it is determined at block 318 that the outlet temperature of the coolant flow is at or falls below the threshold coolant flow outlet temperature, the process 300 follows to block 320.

At **block 320,** in a second stage of the second response strategy, the process 300 comprises, as the fuel cell power is reducing and responsive to detecting that the outlet temperature of the coolant flow falls below the threshold coolant flow outlet temperature, continuously and gradually, e.g. without abrupt changes, decreasing the flow rate of the coolant flow. The outlet temperature of the coolant flow may be continuously monitored in order to avoid increasing the temperature of the fuel cell stack. The cathode stoichiometry is maintained constant, and the single cell voltage is monitored not to exceed 0.79V.

Additionally, the continuous monitoring of the outlet temperature of the coolant flow is used to ensure that the temperature of the fuel cell stack is maintained within a certain range. For example, if the outlet temperature of the coolant flow is reduced to or below the target inlet coolant temperature, the stack will be overcooling thereby causing the single cell voltage to exceed 0.79V. This may increase the risk of membrane flooding when the flow of the coolant is increased.

As mentioned above, the method in accordance with examples of the present disclosure may be implemented in a genset. In some examples, the method in accordance with examples of the present disclosure may be implemented in a stationary system comprising a fuel cell system.

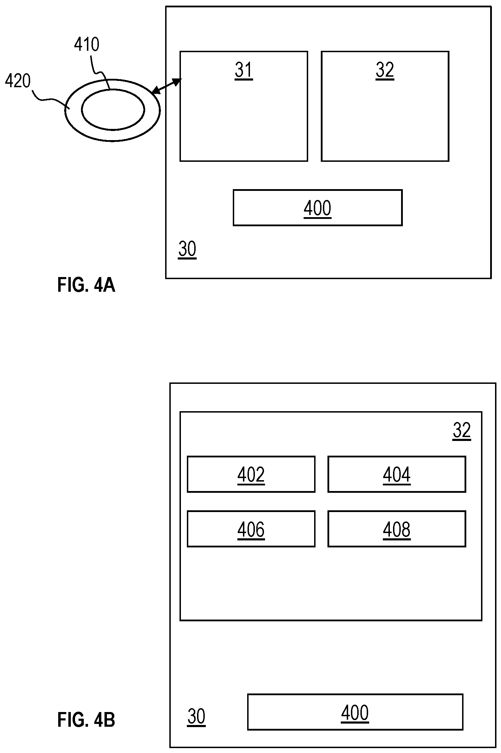

To perform the method steps described herein, the control system 30 may be configured to perform the processing described in connection with FIGs. 4A and 4B and/or any other examples in accordance with the present disclosure. The control system 30 may, for example, comprise an arrangement as depicted in **FIGs. 4A** and **4B****.** The control system 30 may be positioned in any suitable location of the vehicle 10 or another system in which methods in accordance with aspects of the present disclosure are implemented. In some examples, the control system 30 may be part of a vehicle controller e.g. vehicle controller 50 shown in FIG. 1.

As shown in **FIG. 4A****,** the control system 30 comprises processing circuitry 32, memory 31, and an input and output interface 400 configured to communicate with any necessary components and/or entities of examples herein. The input and output interface 400 may comprise a wireless and/or wired receiver and a wireless and/or wired transmitter. In some examples, the input and output interface 400 may comprise a wireless and/or wired transceiver. The control system 30 may use the input and output interface 400 to control and communicate with various sensors, actuators, subsystems, and/or interfaces of the fuel cell system and the vehicle 10, by using any one or more out of a Controller Area Network (CAN) bus, ethernet cables, Wi-Fi, Bluetooth, and/or other network interfaces.

The methods described herein may be implemented using processing circuitry, e.g., one or more processors, such as the processing circuitry 32 of the control system 30, together with computer program code stored in a computer-readable storage medium for performing the functions and actions of the examples herein.

The memory 31 may comprise one or more memory units. The memory 31 comprises computer-executable instructions executable by the processing circuitry 32 of the control system 30. The memory 31 is configured to store, e.g., information, data, etc., and the computer-executable instructions to perform, when executed by the processing circuitry 32, the methods in accordance with examples herein. The control system 30 may additionally obtain information from an external memory.

The methods according to the aspects of the present disclosure may be implemented by e.g. a computer program product 410 or a computer program, comprising computer-executable instructions, i.e., software code portions, which, when executed on at least one processor, e.g., the processing circuitry 32, cause the at least one processor to carry out the actions described herein, as performed by the control system 30.

In some examples, the computer program product 410 is stored on a computer-readable storage medium 420. The computer-readable storage medium 420 may be, e.g., a disc, a universal serial bus (USB) stick, or similar device. The computer-readable storage medium 420, having stored thereon the computer program product, may comprise computer-executable instructions which, when executed by the processing circuitry 32, cause the processing circuitry 32 to perform the actions of the methods in accordance with examples of the present disclosure described herein, as performed by the control system 30.

As shown in **FIG. 4B****,** the control system 30 may comprise **an obtaining unit 402.** The control unit system 30, the processing circuitry 32, and/or the obtaining unit 402 may be configured to obtain or acquire a prediction that the vehicle, comprising a fuel cell system, traveling a route is approaching a part of the route where a portion associated with a high power demand from the fuel cell system is expected to be followed by a portion associated with a low power demand from the fuel cell system where a brake event is expected.

The control system 30 may comprise **a monitoring unit 404.** The control unit system 30, the processing circuitry 32, and/or the monitoring unit 404 may be configured to monitor a single cell voltage for the fuel cell unit, so that the single cell voltage does not exceed 0.79V.

As also shown in **FIG. 4B****,** the control system 30 may comprise a **determining unit 406.** The control system 30, the processing circuitry 32, and/or the determining unit 406 are configured to preemptively i.e. in advance determine a required decrease in power of the fuel cell system based on the required brake power that is required by the vehicle at the portion of the route associated with the low power demand.

The control system 30 may comprise **a controlling unit 408.** The control system 30, the processing circuitry 32, and/or the controlling unit 408 are configured to control the fuel cell system to reduce the power of the fuel cell system in preparation for the brake event based on the required brake power. The control may be performed, by or using the controlling unit 408, part of the processing shown at blocks 306, 308, 310, 312, 314, 316, 318, and 320 of FIG. 3.

Those skilled in the art will appreciate that the units in the control system 30 described above may refer to a combination of analogue and digital circuits, and/or one or more processors configured with software and/or firmware, e.g., stored in the control system 30, that, when executed by the respective one or more processors, may perform the methods in accordance with embodiments of the present disclosure. One or more of these processors, as well as the other digital hardware, may be included in a single Application-Specific Integrated Circuitry (ASIC), or several processors and various digital hardware may be distributed among several separate components, whether individually packaged or assembled into a system-on-a-chip.

The operational steps described in any of the exemplary aspects herein are described to provide examples and discussion. The steps may be performed by hardware components, may be embodied in machine-executable instructions to cause a processor to perform the steps, or may be performed by a combination of hardware and software. Although a specific order of method steps may be shown or described, the order of the steps may differ. In addition, two or more steps may be performed concurrently or with partial concurrence.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the inventive concepts being set forth in the following claims.

## Claims

1. A fuel cell system (20) for a vehicle (10), the fuel cell system (20) comprising:
a fuel cell unit (21) that comprises a fuel cell stack (22) comprising a cathode and an anode, the cathode being configured to receive an air flow via a cathode inlet line (38);
a coolant system (46) configured to circulate a coolant through the fuel cell stack (22), the coolant system comprising a coolant inlet line (48) configured to direct a coolant flow to the fuel cell stack and a coolant outlet line (56) configured to carry the coolant flow away from the fuel cell stack after the coolant has passed through the fuel cell stack (22);
a control system (30) comprising processing circuitry (32) that is configured to:
preemptively determine a required decrease in power of the fuel cell system based on a required brake power that is required by a vehicle traveling a route at a portion of the route associated with a low power demand from the fuel cell system; and
control the fuel cell system to reduce the power of the fuel cell system in preparation for a brake event based on the required brake power, by:
reducing a target inlet coolant temperature of the coolant flow to a first temperature threshold so that an inlet temperature of the coolant flow falls below a threshold coolant flow inlet temperature by a time when the vehicle begins traveling the portion associated with the low power demand from the fuel cell system;
responsive to determining that the required decrease in the power of the fuel cell system is in a magnitude of equal to or less than a first threshold power level and associated with a first ramp-down rate requirement, applying a first response strategy that comprises continuously reducing the flow rate of the coolant flow to a value corresponding to the required decrease in the power of the fuel cell system; and
responsive to determining that the required decrease in the power of the fuel cell system is in a magnitude of greater than the first threshold power level and associated with a second ramp-down rate requirement, applying a second response strategy that comprises:
in a first stage of the second response strategy, continuously and gradually increasing the flow rate of the coolant flow; and
in a second stage of the second response strategy, as the power of the fuel cell system is reducing and responsive to determining that an outlet temperature of the coolant flow falls below a threshold coolant flow outlet temperature, continuously and gradually decreasing the flow rate of the coolant flow.

2. The fuel cell system of claim 1, wherein the processing circuitry is configured to monitor a single cell voltage for the fuel cell stack so that the single cell voltage does not exceed 0.79V.

3. The fuel cell system of claim 1 or 2, wherein the processing circuitry is further configured to control the fuel cell system to reduce the power of the fuel cell system in preparation for the brake event based on the required brake power by:
continuously monitoring an outlet temperature of the coolant flow in order to avoid increasing a temperature of the fuel cell stack of the fuel cell unit; and
maintaining a cathode stoichiometry constant.

4. The fuel cell system of any one of claims 1 to 3, wherein the cathode stoichiometry is maintained constant by adjusting a power of an air compressor configured to pressurize the air flow provided to the cathode of the fuel cell stack, so that a flow rate of the air flow remains in a constant relation to electrical current output from fuel cell system.

5. The fuel cell system of any one of claims 1 to 4, wherein the processing circuitry is configured to acquire a prediction that the vehicle traveling the route is approaching a part of the route where a portion associated with a high power demand from the fuel cell system is expected to be followed by the portion associated with the low power demand from the fuel cell system where the brake event is expected, wherein the prediction comprises a prediction of an upcoming top of a descent along the route.

6. A fuel cell vehicle comprising a fuel cell system of any one of claims 1-5.

7. A method for controlling operation of a fuel cell system for a vehicle, the fuel cell system comprising a fuel cell unit comprising a fuel cell stack, the method comprising:
preemptively determining (304) a required decrease in power of the fuel cell system based on a required brake power that is required by a vehicle traveling a route at a portion of the route associated with a low power demand; and
controlling (306) the fuel cell system to reduce the power of the fuel cell system in preparation for a brake event based on the required brake power, by:
reducing (308) a target inlet coolant temperature of a coolant flow to a first temperature threshold so that an inlet temperature of the coolant flow flown through a coolant system of the fuel cell system falls below a threshold coolant flow inlet temperature by a time when the vehicle begins traveling the portion associated with the low power demand from the fuel cell system;
responsive to determining (310) that the required decrease in the power of the fuel cell system is in a magnitude of equal to or less than a first threshold power level and associated with a first ramp-down rate requirement, applying (312) a first response strategy that comprises continuously reducing the flow rate of the coolant flow to a value corresponding to the required decrease in the power of the fuel cell system; and
responsive to determining (310) that the required decrease in the power of the fuel cell system is in a magnitude of greater than the first threshold power level and associated with a second ramp-down rate requirement, applying (314) a second response strategy that comprises:
in a first stage of the second response strategy, continuously and gradually increasing (316) the flow rate of the coolant flow; and
in a second stage of the second response strategy, as the power of the fuel cell system is reducing and responsive to determining that an outlet temperature of the coolant flow falls below a threshold coolant flow outlet temperature, continuously and gradually (320) decreasing the flow rate of the coolant flow.

8. The method of claim 7, comprising monitoring (303) a single cell voltage for the fuel cell stack so that the single cell voltage does not exceed 0.79V.

9. The method of claim 7 or 8, wherein the controlling of the fuel cell system to reduce the power of the fuel cell system in preparation for the brake event based on the required brake power comprises:
continuously monitoring an outlet temperature of the coolant flow in order to avoid increasing a temperature of the fuel cell stack of the fuel cell unit; and
maintaining a cathode stoichiometry constant.

10. The method of any one of claims 7 to 9, wherein the cathode stoichiometry is maintained constant by adjusting a power of an air compressor configured to pressurize an air flow provided to a cathode of the fuel cell stack, so that a flow rate of the air flow remains in a constant relation to electrical current output from fuel cell system.

11. The method of any one of claims 7 to 10, comprising acquiring a prediction that the vehicle traveling the route is approaching a part of the route where a portion associated with a high power demand from the fuel cell system is expected to be followed by the portion associated with the low power demand from the fuel cell system where the brake event is expected.

12. A control system (30) for controlling a fuel cell system (20) of a fuel cell vehicle (10), the control system (30) comprising processing circuitry (32) configured to perform the method of any one of claims 7 to 11.

13. A fuel cell vehicle (10) comprising the control system (30) of claim 12.

14. A computer program product comprising comprises computer-executable instructions, which, when executed by processing circuitry, cause the processing circuitry to perform the method of any one of claims 7 to 11.

15. A computer-readable storage medium, having stored thereon a computer program product comprising comprises computer-executable instructions which, when executed by processing circuitry, cause the processing circuitry to perform the method of any one of claims 7 to 11.
